# EUROPEAN PATENT SPECIFICATION

(11) **EP 4 590 410 B1**
(45) Date of publication and mention of the grant of the patent: **09.12.2026**
(21) Application number: 23783513.7
(22) Date of filing: 07.09.2023
(51) Int. Cl.: B01D 11/02, B01J 3/00, C08J 11/02, C08J 11/08

(54) **METHOD FOR RECYCLING POLYVINYL CHLORIDE PRODUCTS**
VERFAHREN ZUR WIEDERVERWENDUNG VON POLYVINYLCHLORIDPRODUKTEN
PROCÉDÉ DE RECYCLAGE DE PRODUITS EN POLYCHLORURE DE VINYLE

(30) Priority: 20.09.2022 BE 202205743
(43) Date of publication of application: 30.07.2025
(73) Proprietor: Unilin, BV, 8710 Wielsbeke (BE)
(72) Inventor: LEDEGEN, Sam, 8710 Wielsbeke (BE)
(74) Representative: Unilin Technologies
(86) International application number: PCT/IB2023/058850
(87) International publication number: WO 2024/062323

(56) References cited:
- JP-A- 2007 181 979
- KR-A- 20160 137 751

## Description

This invention relates to a method for recycling polyvinyl chloride (PVC) products, such that the polyvinyl chloride polymer from these products can be used for producing new polyvinyl chloride products.

Although polyvinyl chloride is a thermoplastic polymer, recycling of polyvinyl chloride products is problematic. This is mainly due to the additives and impurities that PVC products comprise. Most polyvinyl chloride products - and certainly those made of soft PVC - comprise plasticizers. Phthalates are known plasticizers. Some types of phthalates that were used in the past as plasticizers in PVC have now even been banned. Furthermore, polyvinyl chloride products can comprise, inter alia, fillers (e.g. CaCO₃), colorants and heavy metals.

The composition of PVC products is strongly dependent on their application. This makes recycling of end-of-life PVC products particularly difficult.

The production of new PVC products requires polyvinyl chloride polymer containing the accompanying desired additive substances that are specific to the intended application of the new PVC product.

The object of the invention is to provide a better and widely applicable method for recycling polyvinyl chloride products so that the polyvinyl chloride polymer from these products can be used for producing new polyvinyl chloride products.

The scope of protection is provided by independent claim 1. The dependent claims describe preferred embodiments.

The invention relates to a method for recycling polyvinyl chloride (PVC) products. The method comprises the step of treating the polyvinyl chloride products to be recycled in an ionic liquid.

The method according to the invention has the advantage that separation of the polyvinyl chloride from the additives (such as plasticizers) and contaminants can be achieved in an efficient manner. This allows the polyvinyl chloride to be reused for a wide range of applications.

A preferred embodiment is characterized in that the polyvinyl chloride products to be recycled are particles. Preferably, 50% by volume of the particles are smaller than 1 millimeter. More preferably, 90% by volume of the particles are smaller than 1 millimeter. The particle size of the polyvinyl chloride products to be recycled can be measured by laser diffraction. This embodiment has the advantage that the method can be carried out more rapidly because migration of components from the PVC to the ionic liquid can take place more quickly.

A preferred embodiment is characterized in that treatment of the polyvinyl chloride products to be recycled in the ionic liquid takes place at elevated temperature, preferably at a temperature higher than 100°C, more preferably at a temperature higher than 150°C, more preferably at a temperature higher than 200°C. These embodiments allow optimization of the method in that treatment of the products to be recycled takes place more quickly.

A preferred embodiment is characterized in that the treatment in an ionic liquid is an extraction treatment, wherein substances are extracted by the ionic liquid from the polyvinyl chloride products to be recycled. This embodiment allows additives (e.g. plasticizers, e.g. phthalates) to be efficiently removed from the polyvinyl chloride products to be recycled so that after separation of the remaining polyvinyl chloride, this polyvinyl chloride can be used for the production of a wide range of new polyvinyl chloride products.

In the extraction treatment, plasticizers (e.g. phthalates) and/or polar components and/or acrylate resins and/or organic components and/or humus and/or auxiliaries and/or impurities (e.g. heavy metals) are preferably extracted from the polyvinyl chloride products.

A preferred embodiment is characterized in that the method comprises the step wherein the polyvinyl chloride recyclate is separated from the ionic liquid, preferably by a filtration process. After separation of the polyvinyl chloride recyclate, it can be used for the production of a wide range of new polyvinyl chloride products.

Preferably, the polyvinyl chloride recyclate is washed after separation from the ionic liquid. This allows polyvinyl chloride of even higher purity to be obtained.

A preferred embodiment is characterized in that the method comprises the step wherein at least part - and preferably all - of the extracted substances (and preferably at least plasticizers, e.g. phthalates) is removed from the ionic liquid. Preferably, at least part of the extracted substances (and preferably at least plasticizers, e.g. phthalates) is removed from the ionic liquid by means of a temperature increase in the ionic liquid, more preferably by means of a distillation process.

This embodiment has the advantage that the ionic liquid can be reused when the method is carried out again with new polyvinyl chloride products to be recycled, e.g. in a closed circuit. This allows the method to be carried out in a more cost-effective manner.

A preferred embodiment is characterized in that heavy metals are extracted by the ionic liquid from the polyvinyl chloride products to be recycled, wherein the method comprises the step in which the extracted heavy metals are removed from the ionic liquid, preferably by means of precipitation (e.g. by means of reducing the metal ions, preferably by means of an electrochemical process or by means of adjustment of the acidity) or by means of electrodeposition. This embodiment has the advantage that the ionic liquid can be reused when the method is carried out again with new polyvinyl chloride products to be recycled, e.g. in a closed circuit. This allows the method to be carried out in a more cost-effective manner.

A preferred embodiment is characterized in that at least part of the extracted substances is removed from the ionic liquid by means of adding water, wherein the at least part of the extracted substances passes into the water, followed by phase separation and removal of the water with the extracted substances in it. Preferably, the extracted substances that pass into water comprise one or more of salts (e.g. sodium chloride), water-soluble pigments or biomass (e.g. sugars and proteins).

This embodiment has the advantage that the ionic liquid can be reused when the method is carried out again with new polyvinyl chloride products to be recycled, e.g. in a closed circuit. This allows the method to be carried out in a more cost-effective manner.

A preferred embodiment is characterized in that the ionic liquid is used in a closed circuit, so that after removal of the extracted substances from the ionic liquid, this ionic liquid can be reused for treatment of polyvinyl chloride products to be recycled such as in any embodiment of the method according to the invention.

This embodiment means that the required amount of ionic liquid can be limited, in view of the fact that the ionic liquid is recycled in a closed circuit so as to be reused in one of the following embodiments of the method according to the invention.

A preferred embodiment is characterized in that, in the step of treating the polyvinyl chloride products to be recycled in the ionic liquid, the polyvinyl chloride of the polyvinyl chloride products to be recycled is substantially extracted or dissolved in the ionic liquid.

This embodiment has the advantage that - by selection of a suitable ionic liquid and processing conditions - the polyvinyl chloride is taken up in the ionic liquid, while additives are not taken up therein. After separation of the ionic liquid from the additives and separation of the polyvinyl chloride from the ionic liquid, the polyvinyl chloride can be used for the production of a wide range of new polyvinyl chloride products.

A preferred embodiment is characterized in that the polyvinyl chloride of the polyvinyl chloride products to be recycled is substantially extracted or dissolved in the ionic liquid at a temperature lower than the temperature at which dehydrochlorination of the polyvinyl chloride occurs in the ionic liquid used, more preferably at a temperature that is at least 10°C, and more preferably at least 20°C, lower than the temperature at which dehydrochlorination of the polyvinyl chloride occurs in the ionic liquid used.

These embodiments have the advantage that the polyvinyl chloride can be extracted or dissolved in the ionic liquid without the occurrence of dehydrochlorination of the polyvinyl chloride. This allows the polyvinyl chloride to then be recovered in order to produce new polyvinyl chloride products.

Preferably, after the substantial extraction or dissolution of the polyvinyl chloride in the ionic liquid, the method comprises the step of adding a solvent, wherein the ionic liquid dissolves in the solvent, wherein the polyvinyl chloride precipitates, so that the polyvinyl chloride can be separated.

Such embodiments have the advantage that the polyvinyl chloride can be separated and reused for producing new polyvinyl chloride products.

For example, formic acid or water can be used as a solvent in such embodiments.

Separation of precipitated polyvinyl chloride can be carried out by means of centrifugation or another suitable separation technique.

It is possible that in embodiments wherein the polyvinyl chloride of the polyvinyl chloride products to be recycled is substantially extracted or dissolved in the ionic liquid, additives (such as e.g. plasticizers) may also be dissolved from the polyvinyl chloride products in the ionic liquid. However, the polyvinyl chloride can then be separately precipitated from the ionic liquid by adding a suitable solvent to the ionic liquid.

A preferred embodiment is characterized in that the ionic liquid comprises or is a mixture of an ionic liquid A and an ionic liquid B; wherein in the method, the polyvinyl chloride of the polyvinyl chloride products to be recycled is substantially dissolved in the ionic liquid A or extracted therein; and wherein substances (e.g. additives such as e.g. plasticizers) from the polyvinyl products to be recycled are extracted or dissolved in the ionic liquid B.

Preferably, after treatment of the polyvinyl chloride products to be recycled in the ionic liquid, the method comprises the step of separation of the ionic liquid A from the ionic liquid B, for example by means of controlling the temperature.

This preferred embodiment has the advantage that the two ionic liquids are separated. The polyvinyl chloride can then be obtained from the ionic liquid A and used for the production of new polyvinyl chloride products. The ionic liquid A can then be reused. Ionic liquid B can be purified by removal of the extracted substances dissolved therein and reused.

In embodiments wherein, in the step of treating the polyvinyl chloride products to be recycled in the ionic liquid, the polyvinyl chloride of the polyvinyl chloride products to be recycled is substantially extracted or dissolved in the ionic liquid, the ionic liquid preferably comprises one or more of 1-butyl-3-methyl imidazolium tetrafluoroborate ([BMIM][BF4]), 1-butyl-3-methyl imidazolium hexafluorophosphate ([BMIM][PF6]), 2,4-bis(2-hydroxypropyl)-1,1,3,3-tetramethyl guanidinium tetrafluoroborate ([TMGHPO2][BF4]), or tetramethyl guanidinelactate (TMGL).

These ionic liquids are highly effective for dissolving polyvinyl chloride.

A preferred embodiment is characterized in that the ionic liquid comprises an organic cation; and an organic or an inorganic anion. Preferably, the organic cation comprises a phosphorus or a nitrogen atom.

Such ionic liquids are highly suitable for use in the method according to the invention.

A preferred embodiment of the invention is characterized in that the ionic liquid is selected from the following classes: an ammonium ionic liquid, a phosphonium ionic liquid, an imidazolium ionic liquid, a pyridinium ionic liquid, a pyrrolidinium ionic liquid.

Such ionic liquids are highly suitable for use in the method according to the invention.

A preferred embodiment is characterized in that the ionic liquid is selected from 1-octyl-3-methylimidazolium tetrafluoroborate ([C8mim][BF4]), 1-octyl-3-methylimidazolium hexafluorophosphate ([C8mim][PF6]), or triethylammonium hydrogen sulfate ([HNEt3][HSO4]).

Such ionic liquids are highly suitable for the removal of phthalate plasticizers from the polyvinyl chloride products to be recycled. Phthalate plasticizers are the most important group of additives that must be removed from the polyvinyl chloride products to be recycled.

A preferred embodiment of the method of the invention is characterized in that the anion of the ionic liquid is selected from one or more of MeSO₃⁻ (methyl sulfonate anion), FSI (bis(fluorosulfonyl)imide), N(CN)₂⁻ (dicyanamide anion), alkylOSO₃⁻, HSO₄⁻, NO₃⁻, benzene sulfonate anion, vinyl sulfonate anion, tosylate anion, propane disulfonate anion.

These anions have the advantage for use in the invention in that they function as dehydrochlorination inhibitors in the ionic liquid used. This allows the breakdown of polyvinyl chloride - for example when it is dissolved or extracted in the ionic liquid - to be prevented. In this manner, a maximum amount of polyvinyl chloride can be recycled for use in the production of new polyvinyl chloride products.

An advantageous method is characterized in that the cation of the ionic liquid is selected from one or more of TOMP (trioctylmethylphosphonium), TBMA (methyltributylammonium), TOMA (methyltrioctylammonium), and TOAH (trioctylammonium).

These cations have the advantage of being inexpensive and readily available. Furthermore, they have the advantage that in combination with a suitable anion, polyvinyl chloride can be dissolved in the ionic liquid at a temperature lower than the temperature at which dehydrochlorination of polyvinyl chloride occurs.

A preferred embodiment of the method is characterized in that the ionic liquid is selected from one or more of
TOMP (trioctylmethylphosphonium) as cation and MeSO₃⁻ (methyl sulfonate anion) as anion,
TBMA (methyltributylammonium) as cation and MeSO₃⁻ (methyl sulfonate anion) as anion,
TOMA (methyltrioctylammonium) as cation and MeSO₃⁻ (methyl sulfonate anion) as anion,
TOMA (methyltrioctylammonium) as cation and NO₃⁻ as anion,
TOAH (trioctylammonium) as cation and MeSO₃⁻ (methyl sulfonate anion) as anion,
TOAH (trioctylammonium) as cation and tosylate anion as anion,
TOAH (trioctylammonium) as cation and benzene sulfonate anion as anion.

These ionic liquids have the advantage of being readily available and inexpensive. Furthermore, polyvinyl chloride can be dissolved therein at temperatures lower than the dehydrochlorination temperature of polyvinyl chloride in the treatment of polyvinyl chloride products with these ionic liquids.

It has also been found that after dissolution of polyvinyl chloride in these ionic liquids, the polyvinyl chloride can be precipitated from the ionic liquid by adding a solvent to the ionic liquid in which the polyvinyl chloride is dissolved. For example, formic acid or water can be used as solvent.

A preferred embodiment is characterized in that treatment of the polyvinyl chloride products to be recycled in the ionic liquid is carried out with a first ionic liquid according to any embodiment of the method according to the invention. This preferred embodiment further comprises the step wherein the polyvinyl chloride products to be recycled are treated in a second ionic liquid according to any embodiment of the method according to the invention. The first ionic liquid has a different chemical composition in this case from the second ionic liquid.

Through suitable selection of the first ionic liquid and the second ionic liquid, this embodiment allows the polyvinyl chloride products to be recycled to be optimally purified. By suitable selection of the first ionic liquid and the second ionic liquid, a first portion of additives can be extracted in the first ionic liquid, while a second portion of additives can be extracted in the second ionic liquid.

A preferred embodiment is characterized in that the ionic liquid is a mixture of at least a first ionic liquid and a second ionic liquid, wherein the first ionic liquid has a different chemical composition from the second ionic liquid.

Through suitable selection of the first ionic liquid and the second ionic liquid, this embodiment allows the polyvinyl chloride products to be recycled to be optimally purified. By suitable selection of the first ionic liquid and the second ionic liquid, a first portion of additives can be extracted in the first ionic liquid, while a second portion of additives can be extracted in the second ionic liquid. After the treatment with the mixture of these ionic liquids, a phase separation of the two ionic liquids can be carried out, for example by controlling the temperature, followed by removal of the extracted substances from the two ionic liquids, after which both of these ionic liquids can be reused.

A preferred embodiment is characterized in that the method comprises the step wherein extraction of the polyvinyl chloride products to be recycled is carried out in supercritical carbon dioxide; preferably wherein in this step, organic substances, preferably plasticizers, more preferably phthalates, are extracted by the supercritical carbon dioxide from the polyvinyl chloride products to be recycled.

This embodiment makes it possible, with the aid of the supercritical carbon dioxide, to extract organic substances, for example phthalate plasticizers, from the polyvinyl chloride to be recycled. Other additives in the polyvinyl chloride products to be recycled can be recycled using the ionic liquid from the polyvinyl chloride to be recycled. By suitably selecting the ionic liquid, one can therefore achieve optimum purification of the polyvinyl chloride to be recycled: the additives and other substances in the polyvinyl chloride that cannot be removed - or are difficult to remove or cannot be completely removed - by the treatment with supercritical carbon dioxide can be removed using the ionic liquid.

In the embodiment wherein the method comprises the step in which extraction of the polyvinyl chloride products to be recycled is carried out in supercritical carbon dioxide, in the step of treating the polyvinyl chloride products to be recycled in the ionic liquid, heavy metals and/or pigments are preferably extracted using the ionic liquid from the polyvinyl chloride products to be recycled. Extraction with supercritical carbon dioxide is not suitable for removing heavy metals and pigments (primarily inorganic pigments) from polyvinyl chloride. These substances can be removed from the polyvinyl chloride by suitably selecting the ionic liquid. This embodiment therefore allows optimum purification of the polyvinyl chloride products to be recycled to be achieved.

In a preferred embodiment wherein extraction of the polyvinyl chloride products to be recycled is carried out in supercritical carbon dioxide, this step is carried out after the step of treating the polyvinyl chloride products to be recycled in the ionic liquid.

This embodiment makes it possible to work with a smaller amount of supercritical carbon dioxide or to reduce the duration of effect of the supercritical carbon dioxide. The treatment with the ionic liquid has already removed substances from the polyvinyl chloride, which facilitates migration of substances to be extracted through the supercritical carbon dioxide and allows the extraction with supercritical carbon dioxide to be carried out more easily.

In a preferred embodiment wherein extraction of the polyvinyl chloride products to be recycled is carried out in supercritical carbon dioxide, this step is carried out before the step of treating the polyvinyl chloride products to be recycled in the ionic liquid. This embodiment has the advantage that, in the treatment with supercritical carbon dioxide, substances (e.g. phthalate plasticizers) are already removed from the polyvinyl chloride, which gives the polyvinyl chloride a more open structure. This facilitates the effect of the ionic liquid, thus allowing it to better and more quickly extract substances from the polyvinyl chloride.

The method according to the invention is characterized in that the polyvinyl chloride of the polyvinyl chloride products to be recycled, after treatment of the polyvinyl chloride products to be recycled in an ionic liquid, is separated. This polyvinyl chloride can then be used in the production of new polyvinyl chloride products, wherein suitable additives (such as suitable environmentally friendly plasticizers in the desired amounts) can be added.

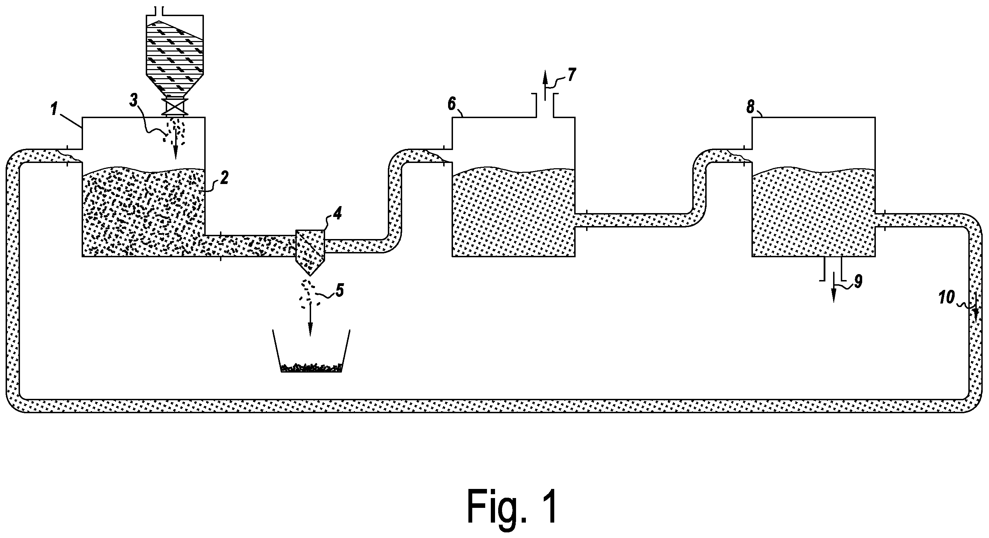

Figure 1 describes an example of implementing the method according to the invention.

Figure 1 shows a first reaction vessel 1 that contains an ionic liquid 2. Examples of ionic liquids that can be used include: 1-octyl-3-methylimidazolium tetrafluoroborate ([C8mim][BF4]), 1-octyl-3-methylimidazolium hexafluorophosphate ([C8mim][PF6]) or triethylammonium hydrogen sulfate ([HNEt3][HSO4]).

Polyvinyl chloride product to be recycled 3 is added and ground into fine particles. This polyvinyl chloride product to be recycled can comprise one or more of production waste or post-consumer waste. If the polyvinyl chloride product comprises or is composed of post-consumer waste, this may be of widely varying composition, primarily with respect to the additives, filler substances and impurities in the polyvinyl chloride.

Extraction takes place in reaction vessel 1, wherein the ionic liquid 2 extracts plasticizers (e.g. phthalates) and a wide range of additives and impurities (such as heavy metals) are removed from the polyvinyl chloride products to be recycled. Via a line 3, the entire mixture is fed to a filter 4, where the polyvinyl chloride is separated. This polyvinyl chloride 5 is free of plasticizers, additives and impurities and can be used for the production of new polyvinyl chloride products.

The ionic liquid - with the substances extracted therein - is fed into a second reaction vessel 6. By means of distillation, plasticizers 7 (e.g. phthalates) and other substances are separated in this reaction vessel from the ionic liquid via line 6.

The ionic liquid is then fed into a third reaction vessel 8, wherein the heavy metals are precipitated using electrodeposition and evacuated via drain 9.

The ionic liquid is then fed back via line 10 to the first reaction vessel 1. The method of the invention is carried out in this manner, wherein the ionic liquid is used in a closed circuit.

**Table I: Test results for dissolution of polyvinyl chloride in selected ionic liquids**

| Test number | Cation | Anion | T DHCL (°C) | T diss (°C) |
|---|---|---|---|---|
| 1 | TOMP | MeSO₃ | 120 | 95 |
| 2 | TBMA | MeSO₃ | 120 | 100 |
| 3 | TOMA | MeSO₃ | 120 | 95 |
| 4 | TOMA | NO₃ | 120 | 95 |
| 5 | TOAH | MeSO₃ | 130 | 85 |
| 6 | TOAH | tosylate | 140 | 110 |
| 7 | TOAH | benzene sulfonate | 140 | 90 |

Table I shows the test results for tests of dissolution of polyvinyl chloride in seven different ionic liquids. "T diss (°C)" indicates the temperature at which the polyvinyl chloride could be dissolved in the ionic liquid. "T DHCL (°C)" indicates the temperature at which dehydrochlorination of polyvinyl chloride occurs when polyvinyl chloride comes into contact with the respective ionic liquid. Polyvinyl chloride therefore dissolves in each of these seven ionic liquids without the occurrence of dehydrochlorination of the polyvinyl chloride.

Using these seven ionic liquids, tests were conducted at 100°C in order to determine whether common additives used in polyvinyl chloride products also dissolve in the ionic liquid. The additives tested were COPO (a polyvinyl-polyacetate copolymer), DOTP (dioctyl terephthalate), DINCH (di(isononyl)cyclohexane-1,2-dicarboxylate) and DINP (diisononyl phthalate).

Each of the above-mentioned plasticizers could be dissolved in the ionic liquids of test numbers 1, 5 and 7 (see Table I) at 100°C. In the ionic liquid of test number 4 (see Table I), COPO, DOTP and DINP could be dissolved at 100°C, but not DINCH. In test numbers 2, 3 and 6 (see Table I), none of the plasticizers tested could be dissolved.

It was also tested whether aluminum sulfate, frequently used in polyvinyl chloride products as a filler, could be dissolved in the seven ionic liquids of Table I. This was not the case. This aluminum sulfate can therefore easily be separated from thoroughly dissolved polyvinyl chloride.

Even in the event that both polyvinyl chloride and some or all additives of the polyvinyl chloride products can be dissolved in the ionic liquid used, it is possible to isolate the polyvinyl chloride by adding a suitable solvent (e.g. formic acid). This causes the polyvinyl chloride to precipitate, while additives remain in solution. The precipitated polyvinyl chloride can then be separated, for example by centrifugation. This polyvinyl chloride can then - after adding suitable and desired additives - be used in the production of new polyvinyl chloride products.

In a similar manner, additives can be removed from the ionic liquid using a suitable solvent.

It is possible to recover the ionic liquids and reuse them.

## Claims

1. Method for recycling polyvinyl chloride (PVC) products, wherein the method comprises the step of treating the polyvinyl chloride products to be recycled in an ionic liquid;
**characterized in that** the polyvinyl chloride of the polyvinyl chloride products to be recycled, after treatment of the polyvinyl chloride products to be recycled in an ionic liquid, is separated.

2. Method in accordance with claim 1, **characterized in that** the treatment in an ionic liquid is an extraction treatment, wherein substances are extracted by the ionic liquid from the polyvinyl products to be recycled.

3. Method in accordance with claim 2, **characterized in that** in the extraction treatment, plasticizers (e.g. phthalates) and/or polar components and/or acrylate resins and/or organic components and/or humus and/or auxiliaries and/or impurities (e.g. heavy metals) are extracted from the polyvinyl chloride products.

4. Method in accordance with either one of the preceding claims 2 - 3, **characterized in that** the method comprises the step wherein the polyvinyl chloride recyclate is separated from the ionic liquid, preferably by a filtration process.

5. Method in accordance with claim 4, **characterized in that** the polyvinyl chloride recyclate is washed after separation from the ionic liquid.

6. Method in accordance with any of the preceding claims 2 - 5, **characterized in that** the method comprises the step wherein at least part - and preferably all - of the extracted substances (and preferably at least plasticizers, e.g. phthalates) is removed from the ionic liquid, preferably wherein at least part of the extracted substances (and preferably at least plasticizers, e.g. phthalates) is removed from the ionic liquid by means of a temperature increase in the ionic liquid, more preferably by means of a distillation process.

7. Method in accordance with any of the preceding claims 2 - 6, **characterized in that** heavy metals are extracted by the ionic liquid from the polyvinyl chloride products to be recycled, wherein the method comprises the step in which the extracted heavy metals are removed from the ionic liquid, preferably by means of precipitation (e.g. by means of reducing the metal ions, preferably by means of an electrochemical process or by means of adjustment of the acidity) or by means of electrodeposition.

8. Method in accordance with any of the preceding claims 2 - 7, **characterized in that** at least part of the extracted substances is removed from the ionic liquid by means of adding water, wherein the at least part of the extracted substances passes into the water, followed by phase separation and removal of the water with the extracted substances in it; preferably wherein the extracted substances that pass into water comprise one or more of salts (e.g. sodium chloride), water-soluble pigments or biomass (e.g. sugars and proteins).

9. Method in accordance with any of the preceding claims 6 - 8, **characterized in that** the ionic liquid is used in a closed circuit, so that after removal of the extracted substances from the ionic liquid, this ionic liquid can be reused for treatment of polyvinyl chloride products to be recycled in accordance with any of the preceding claims 1 - 8.

10. Method in accordance with claim 1, **characterized in that** in the step of treating the polyvinyl chloride products to be recycled in the ionic liquid, the polyvinyl chloride of the polyvinyl chloride products to be recycled is substantially extracted or dissolved in the ionic liquid; and **in that** the polyvinyl chloride of the polyvinyl chloride products to be recycled is substantially extracted or dissolved in the ionic liquid at a temperature lower than the temperature at which dehydrochlorination of the polyvinyl chloride occurs in the ionic liquid used, preferably at a temperature that is at least 10°C, and more preferably at least 20°C, lower than the temperature at which dehydrochlorination of the polyvinyl chloride occurs in the ionic liquid used.

11. Method in accordance with claim 1, and optionally as in claim 10, **characterized in that** in the step of treating the polyvinyl chloride products to be recycled in the ionic liquid, the polyvinyl chloride of the polyvinyl chloride products to be recycled is substantially extracted or dissolved in the ionic liquid; and **in that** after the substantial extraction or dissolution of the polyvinyl chloride in the ionic liquid, the method comprises adding a solvent - e.g. formic acid -, wherein the ionic liquid dissolves in the solvent, wherein the polyvinyl chloride precipitates, so that the polyvinyl chloride can be separated.

12. Method in accordance with claim 1, and optionally as in claims 10 or 11, **characterized in that** in the step of treating the polyvinyl chloride products to be recycled in the ionic liquid, the polyvinyl chloride of the polyvinyl chloride products to be recycled is substantially extracted or dissolved in the ionic liquid; and **in that** the ionic liquid comprises or is a mixture of an ionic liquid A and an ionic liquid B; wherein in the method, the polyvinyl chloride of the polyvinyl chloride products to be recycled is substantially dissolved in the ionic liquid A or extracted therein; and wherein substances (e.g. additives such as e.g. plasticizers) from the polyvinyl products to be recycled are extracted or dissolved in the ionic liquid B.

13. Method in accordance with claim 12, **characterized in that** after treatment of the polyvinyl chloride products to be recycled in the ionic liquid, the method comprises the step of separation of the ionic liquid A from the ionic liquid B, for example by means of controlling the temperature.

14. Method in accordance with any of the preceding claims, **characterized in that** treatment of the polyvinyl chloride products to be recycled in the ionic liquid is carried out with a first ionic liquid in accordance with any of the preceding claims;
wherein the method comprises the step wherein the polyvinyl chloride products to be recycled are treated in a second ionic liquid in accordance with any of the preceding claims;
wherein the first ionic liquid has a different chemical composition from the second ionic liquid.

15. Method in accordance with any of the preceding claims, **characterized in that** the ionic liquid is a mixture of at least a first ionic liquid and a second ionic liquid, wherein the first ionic liquid has a different chemical composition from the second ionic liquid.

## Patentansprüche

1. Verfahren zum Recycling von Produkten auf Basis von Polyvinylchlorid (PVC), wobei das Verfahren den Schritt umfasst, bei dem die zu recycelnden Produkte auf Basis von Polyvinylchlorid in einer ionischen Flüssigkeit verarbeitet werden;
**dadurch gekennzeichnet, dass** das Polyvinylchlorid der zu recycelnden Produkte auf Basis von Polyvinylchlorid abgetrennt wird, nachdem die zu recycelnden Produkte auf Basis von Polyvinylchlorid in einer ionischen Flüssigkeit verarbeitet wurden.

2. Verfahren nach Anspruch 1, **dadurch gekennzeichnet, dass** die Verarbeitung in einer ionischen Flüssigkeit eine Extraktionsbehandlung ist, wobei Substanzen durch die ionische Flüssigkeit aus den zu recycelnden Produkten auf Basis von Polyvinyl extrahiert werden.

3. Verfahren nach Anspruch 2, **dadurch gekennzeichnet, dass** in der Extraktionsbehandlung Weichmacher (z. B. Phthalate) und/oder polare Bestandteile und/oder Acrylatharze und/oder organische Komponenten und/oder Humus und/oder Hilfsstoffe und/oder Verunreinigungen (z. B. Schwermetalle) aus den Produkten auf Basis von Polyvinylchlorid extrahiert werden.

4. Verfahren nach einem der vorstehenden Ansprüche 2 bis 3, **dadurch gekennzeichnet, dass** das Verfahren den Schritt umfasst, bei dem das Polyvinylchlorid-Recyclat von der ionischen Flüssigkeit, vorzugsweise mittels eines Filtrationsverfahrens, getrennt wird.

5. Verfahren nach Anspruch 4, **dadurch gekennzeichnet, dass** das Polyvinylchlorid-Recyclat nach seiner Abtrennung aus der ionischen Flüssigkeit gewaschen wird.

6. Verfahren nach einem der vorstehenden Ansprüche 2 bis 5, **dadurch gekennzeichnet, dass** das Verfahren den Schritt umfasst, bei dem mindestens ein Teil - und vorzugsweise alle - der extrahierten Substanzen (und vorzugsweise mindestens Weichmacher, beispielsweise Phthalate) aus der ionischen Flüssigkeit entfernt wird; bei dem vorzugsweise mindestens ein Teil der extrahierten Substanzen (und vorzugsweise mindestens Weichmacher, beispielsweise Phthalate) aus der ionischen Flüssigkeit mittels einer Erhöhung der Temperatur in der ionischen Flüssigkeit, in bevorzugter Weise mittels eines Destillationsverfahrens, entfernt wird.

7. Verfahren nach einem der vorstehenden Ansprüche 2 bis 6, **dadurch gekennzeichnet, dass** Schwermetalle aus den zu recycelnden Produkten auf Basis von Polyvinylchlorid mittels der ionischen Flüssigkeit extrahiert werden; wobei das Verfahren den Schritt umfasst, bei dem die extrahierten Schwermetalle aus der ionischen Flüssigkeit, vorzugsweise mittels Ausfällung (beispielsweise mittels Reduktion der Metallionen; vorzugsweise mittels eines elektrochemischen Verfahrens oder mittels Anpassung des Säuregehalts) oder mittels elektrolytischer Abscheidung, entfernt werden.

8. Verfahren nach einem der vorstehenden Ansprüche 2 bis 7, **dadurch gekennzeichnet, dass** mindestens ein Teil der extrahierten Substanzen aus der ionischen Flüssigkeit durch Zugabe von Wasser entfernt wird, wobei der mindestens eine Teil der extrahierten Substanzen in das Wasser übergeht; gefolgt von einer Phasentrennung und einer Entfernung des Wassers mit den darin enthaltenen extrahierten Substanzen; vorzugsweise wobei die in das Wasser übergehenden extrahierten Substanzen ein oder mehrere Salze (z. B. Natriumchlorid), wasserlösliche Pigmente oder Biomasse (z. B. Zucker und Proteine) umfassen.

9. Verfahren nach einem der vorstehenden Ansprüche 6 bis 8, **dadurch gekennzeichnet, dass** die ionische Flüssigkeit in einem geschlossenen Kreislauf verwendet wird, so dass nach der Entfernung der extrahierten Substanzen aus der ionischen Flüssigkeit diese ionische Flüssigkeit zur Verarbeitung von zu recycelnden Produkten auf Basis von Polyvinylchlorid in Übereinstimmung mit einem der vorstehenden Ansprüche 1 bis 8 wiederverwendet werden kann.

10. Verfahren nach Anspruch 1, **dadurch gekennzeichnet, dass** in dem Schritt, in dem die zu recycelnden Produkte auf Basis von Polyvinylchlorid in der ionischen Flüssigkeit verarbeitet werden, das Polyvinylchlorid der zu recycelnden Produkte auf Basis von Polyvinylchlorid im Wesentlichen in der ionischen Flüssigkeit extrahiert oder darin gelöst wird; und dass das Polyvinylchlorid der zu recycelnden Produkte auf Basis von Polyvinylchlorid bei einer Temperatur aus der ionischen Flüssigkeit im Wesentlichen extrahiert oder darin gelöst wird, die unterhalb der Temperatur liegt, bei der eine Dehydrochlorierung des Polyvinylchlorids in der verwendeten ionischen Flüssigkeit stattfindet, vorzugsweise bei einer Temperatur, die um mindestens 10 °C und in bevorzugter Weise um mindestens 20 °C unter der Temperatur liegt, bei der eine Dehydrochlorierung des Polyvinylchlorids in der verwendeten ionischen Flüssigkeit stattfindet.

11. Verfahren nach Anspruch 1 und optional nach Anspruch 10, **dadurch gekennzeichnet, dass** in dem Schritt, in dem die zu recycelnden Produkte auf Basis von Polyvinylchlorid in der ionischen Flüssigkeit verarbeitet werden, das Polyvinylchlorid der zu recycelnden Produkte auf Basis von Polyvinylchlorid aus der ionischen Flüssigkeit im Wesentlichen extrahiert oder darin gelöst wird; und dass das Verfahren nach der wesentlichen Extraktion oder Auflösung des Polyvinylchlorids in der ionischen Flüssigkeit das Folgende umfasst: das Hinzufügen eines Lösungsmittels - beispielsweise Ameisensäure -; wobei die ionische Flüssigkeit sich in dem Lösungsmittel löst; wobei das Polyvinylchlorid derart ausfällt, dass es abgetrennt werden kann.

12. Verfahren nach Anspruch 1 und optional nach Anspruch 10 oder 11, **dadurch gekennzeichnet, dass** in dem Schritt, in dem die zu recycelnden Produkte auf Basis von Polyvinylchlorid in der ionischen Flüssigkeit verarbeitet werden, das Polyvinylchlorid der recycelnden Produkte auf Basis von Polyvinylchlorid aus der ionischen Flüssigkeit im Wesentlichen extrahiert oder darin gelöst wird; und dass die ionische Flüssigkeit eine Mischung aus einer ionischen Flüssigkeit A und einer ionischen Flüssigkeit B umfasst oder darstellt; wobei in dem Verfahren das Polyvinylchlorid der zu recycelnden Produkte auf Basis von Polyvinylchlorid im Wesentlichen in der ionischen Flüssigkeit A gelöst oder aus dieser extrahiert wird; und wobei Substanzen (beispielsweise Additive wie beispielsweise Weichmacher) aus den zu recycelnden Produkten auf Basis von Polyvinyl in die ionische Flüssigkeit B extrahiert oder darin gelöst werden.

13. Verfahren nach Anspruch 12, **dadurch gekennzeichnet, dass** das Verfahren nach der Verarbeitung der zu recycelnden Produkte auf Basis von Polyvinylchlorid den Schritt der Trennung der ionischen Flüssigkeit A von der ionischen Flüssigkeit B umfasst, beispielsweise mittels einer Temperaturregelung.

14. Verfahren nach einem der vorstehenden Ansprüche, **dadurch gekennzeichnet, dass** die Verarbeitung der zu recycelnden Produkte auf Basis von Polyvinylchlorid in der ionischen Flüssigkeit mit einer ersten ionischen Flüssigkeit gemäß einem der vorstehenden Ansprüche durchgeführt wird;
wobei das Verfahren den Schritt umfasst, bei dem die zu recycelnden Produkte auf Basis von Polyvinylchlorid in einer zweiten ionischen Flüssigkeit gemäß einem der vorstehenden Ansprüche verarbeitet werden;
wobei die erste ionische Flüssigkeit eine chemische Zusammensetzung aufweist, die sich von der der zweiten ionischen Flüssigkeit unterscheidet.

15. Verfahren nach einem der vorstehenden Ansprüche, **dadurch gekennzeichnet, dass** die ionische Flüssigkeit eine Mischung aus mindestens einer ersten ionischen Flüssigkeit und einer zweiten ionischen Flüssigkeit ist; wobei die erste ionische Flüssigkeit eine chemische Zusammensetzung aufweist, die sich von der der zweiten ionischen Flüssigkeit unterscheidet.

## Revendications

1. Procédé destiné au recyclage de produits à base de chlorure de polyvinyle (PVC) ; dans lequel le procédé comprend l'étape au cours de laquelle on traite, dans un liquide ionique, les produits à base de chlorure de polyvinyle qui doivent faire l'objet d'un recyclage ;
**caractérisé en ce que** l'on sépare le chlorure de polyvinyle des produits à base de chlorure de polyvinyle qui doivent faire l'objet d'un recyclage, après le traitement, dans un liquide ionique, des produits à base de chlorure de polyvinyle qui doivent faire l'objet d'un recyclage.

2. Procédé selon la revendication 1, **caractérisé en ce que** le traitement dans un liquide ionique est un traitement par extraction, dans lequel des substances sont extraites par le liquide ionique des produits à base de polyvinyle qui doivent faire l'objet d'un recyclage.

3. Procédé selon la revendication 2, **caractérisé en ce que**, dans le traitement par extraction, des plastifiants (par exemple des phtalates) et/ou des composants polaires et/ou des résines acrylates et/ou des composants organiques et/ou de l'humus et/ou des adjuvants et/ou des impuretés (par exemple, des métaux lourds) sont extraits des produits à base de chlorure de polyvinyle.

4. Procédé selon l'une quelconque des revendications précédentes 2 à 3, **caractérisé en ce que** le procédé comprend l'étape au cours de laquelle le recyclat de chlorure de polyvinyle est séparé du liquide ionique, de préférence par l'intermédiaire d'un procédé de filtration.

5. Procédé selon la revendication 4, **caractérisé en ce que** le recyclat de chlorure de polyvinyle est lavé après sa séparation du liquide ionique.

6. Procédé selon l'une quelconque des revendications précédentes 2 à 5, **caractérisé en ce que** le procédé comprend l'étape au cours de laquelle au moins une partie - et de préférence la totalité - des substances qui ont été extraites (et de préférence au moins des plastifiants, par exemple des phtalates) est éliminée du liquide ionique ; de préférence au cours de laquelle au moins une partie des substances qui ont été extraites (et de préférence au moins des plastifiants, par exemple des phtalates) est éliminée du liquide ionique au moyen d'une élévation de la température dans le liquide ionique, de manière plus préférée au moyen d'un procédé de distillation.

7. Procédé selon l'une quelconque des revendications précédentes 2 à 6, **caractérisé en ce que** des métaux lourds sont extraits par l'intermédiaire du liquide ionique des produits à base de chlorure de polyvinyle qui doivent faire l'objet d'un recyclage ; dans lequel le procédé comprend l'étape au cours de laquelle les métaux lourds qui ont été extraits sont retirés du liquide ionique, de préférence au moyen d'une précipitation (par exemple, au moyen d'une réduction des ions métalliques, de préférence au moyen d'un procédé électrochimique ou au moyen d'une adaptation de l'acidité) ou par dépot électrolytique.

8. Procédé selon l'une quelconque des revendications précédentes 2 à 7, **caractérisé en ce qu'**au moins une partie des substances qui ont été extraites est retirée du liquide ionique au moyen d'une addition d'eau ; dans lequel ladite au moins une partie des substances qui ont été extraites passedans l'eau, avant de procéder à une séparation de phase et à une élimination de l'eau dans laquelle se trouvent les substances qui ont été extraites ; de préférence, dans lequel les substances qui ont été extraites que l'on fait passer dans l'eau comprennent un ou plusieurs sels (par exemple, du chlorure de sodium), des pigments solubles dans l'eau ou de la biomasse (par exemple des sucres et des protéines).

9. Procédé selon l'une quelconque des revendications précédentes 6 à 8, **caractérisé en ce que** le liquide ionique est utilisé en circuit fermé, d'une manière telle que, après le retrait, par rapport au liquide ionique, des substances qui ont été extraites, ce liquide ionique peut être réutilisé pour le traitement de produits à base de chlorure de polyvinyle qui doivent faire l'objet d'un recyclage en conformité avec l'une quelconque des revendications précédentes 1 à 8.

10. Procédé selon la revendication 1, **caractérisé en ce que**, dans l'étape au cours de laquelle on traite, dans le liquide ionique, les produits à base de chlorure de polyvinyle qui doivent faire l'objet d'un recyclage, le chlorure de polyvinyle des produits à base de chlorure de polyvinyle qui doivent faire l'objet d'un recyclage est extrait ou est dissous de manière substantielle dans le liquide ionique ; et **en ce que** le chlorure de polyvinyle des produits à base de chlorure de polyvinyle qui doivent faire l'objet d'un recyclage est extrait ou est dissous de manière substantielle dans le liquide ionique à une température qui est inférieure à la température à laquelle a lieu une déshydrochloration du chlorure de polyvinyle dans le liquide ionique que l'on utilise, de préférence à une température qui est inférieure à concurrence d'au moins 10 °C, et de manière plus préférée qui est inférieure à concurrence d'au moins 20 °C à la température à laquelle a lieu une déshydrochloration du chlorure de polyvinyle dans le liquide ionique que l'on utilise.

11. Procédé selon la revendication 1, et de manière facultative selon la revendication 10, **caractérisé en ce que**, dans l'étape au cours de laquelle on traite, dans le liquide ionique, les produits à base de chlorure de polyvinyle qui doivent faire l'objet d'un recyclage, le chlorure de polyvinyle des produits à base de chlorure de polyvinyle qui doivent faire l'objet d'un recyclage est extrait ou est dissous de manière substantielle dans le liquide ionique ; et **en ce que**, après l'extraction ou la dissolution substantielle du chlorure de polyvinyle dans le liquide ionique, le procédé comprend le fait d'ajouter un solvant - par exemple, de l'acide formique - ;
dans lequel le liquide ionique se dissout dans le solvant ; dans lequel le chlorure de polyvinyle précipite, d'une manière telle que le chlorure de polyvinyle peut être séparé.

12. Procédé selon la revendication 1, et de manière facultative selon la revendication 10 ou 11, **caractérisé en ce que**, dans l'étape au cours de laquelle on traite, dans le liquide ionique, les produits à base de chlorure de polyvinyle qui doivent faire l'objet d'un recyclage, le chlorure de polyvinyle des produits à base de chlorure de polyvinyle qui doivent faire l'objet d'un recyclage est extrait ou est dissous de manière substantielle dans le liquide ionique ; et **en ce que** le liquide ionique comprend ou représente un mélange d'un liquide ionique A et d'un liquide ionique B ; dans lequel, dans le procédé, le chlorure de polyvinyle des produits à base de chlorure de polyvinyle qui doivent faire l'objet d'un recyclage est de manière substantielle dissous dans le liquide ionique A ou extrait dans ce dernier ; et dans lequel des substances (par exemple des additifs tels que par exemple des plastifiants) sont extraits ou sont dissous dans le liquide ionique B, par rapport aux produits à base de polyvinyle qui doivent faire l'objet d'un recyclage.

13. Procédé selon la revendication 12, **caractérisé en ce que**, après le traitement, dans un liquide ionique, des produits à base de chlorure de polyvinyle qui doivent faire l'objet d'un recyclage, le procédé comprend l'étape de séparation du liquide ionique A par rapport au liquide ionique B, par exemple au moyen d'un réglage de la température.

14. Procédé selon l'une quelconque des revendications précédentes, **caractérisé en ce que** le traitement, dans un liquide ionique, des produits à base de chlorure de polyvinyle qui doivent faire l'objet d'un recyclage est mis en œuvre avec un premier liquide ionique en conformité avec l'une quelconque des revendications précédentes ;
dans lequel le procédé comprend l'étape au cours de laquelle on traite, dans un deuxième liquide ionique, les produits à base de chlorure de polyvinyle qui doivent faire l'objet d'un recyclage, en conformité avec l'une quelconque des revendications précédentes ;
dans lequel le premier liquide ionique possède une composition chimique qui est différente de celle du deuxième liquide ionique.

15. Procédé selon l'une quelconque des revendications précédentes, **caractérisé en ce que** le liquide ionique est un mélange d'au moins un premier liquide ionique et d'un deuxième liquide ionique ; dans lequel le premier liquide ionique possède une composition chimique qui est différente de celle du deuxième liquide ionique.
